# EUROPEAN PATENT APPLICATION

(11) **EP 1 411 668 A2**
(43) Date of publication of application: **21.04.2004**
(21) Application number: 03255056.8
(22) Date of filing: 14.08.2003
(51) Int. Cl.: H04L 5/02

(54) **Transmission of information on channel conditions**

(30) Priority: 08.10.2002 US 266285
(71) Applicant: LUCENT TECHNOLOGIES INC., Murray Hill, New Jersey 07974-0636 (US)
(72) Inventor: Liu, Jung-Tao, Randolph New Jersey 07869 (US)
(74) Representative: Watts, Christopher Malcolm Kelway, Dr.

(57) **Abstract**

Before the base station may schedule a wireless handset, the method includes the step of transmitting initial channel condition information signal. The initial channel condition information signal corresponds to a set of transmitted blocks, each of which includes a set of orthogonal tones. The initial channel condition information signal may be derived from an average value of at least two of the transmitted blocks. In response to the initial channel condition information signal or to the size of the downlink transmission, the base station subsequently schedules the wireless handset. Thereafter, follow-up channel condition information signal corresponding with a number of allocated blocks is transmitted.

## Description

### BACKGROUND OF THE INVENTION

### I. FIELD OF THE INVENTION

The present invention relates to telecommunications, and more particularly to feedback method for data communications.

### II. DESCRIPTION OF THE RELATED ART

Wireless communications systems employ a number of geographically distributed, cellular communication sites or base stations. Each base station supports the transmission and reception of communication signals to and from stationary or fixed, wireless communication devices or units. Each base station handles communications over a particular region commonly referred to as a cell/ sector. The overall coverage area for a wireless communications system is defined by the union of cells for the deployed base stations. Here, the coverage areas for adjacent or nearby cell sites may overlap one another to ensure, where possible, contiguous communications coverage within the outer boundaries of the system.

When active, a wireless unit receives signals from at least one base station over a forward link or downlink and transmits signals to at least one base station over a reverse link or uplink. Several approaches have been developed for defining links or channels in a cellular communication system, including, for example, TDMA (time-division multiple access), and CDMA (code-division multiple access).

In TDMA communication systems, the radio spectrum is divided into time slots. Each time slow allows only one user to transmit and/or receive. Thusly, TDMA requires precise timing between the transmitter and receiver so that each user may transmit their information during their allocated time.

In CDMA communications systems, different wireless channels are distinguished by different channelization codes or sequences. These distinct channelization codes are used to encode different information streams, which may then be modulated at one or more different carrier frequencies for simultaneous transmission. A receiver may recover a particular stream from a received signal using the appropriate code or sequence to decode the received signal.

For voice applications, conventional cellular communication systems employ dedicated links between a wireless unit and a base station. Voice communications are delay-intolerant by nature. Consequently, wireless units in wireless cellular communication systems transmit and receive signals over one or more dedicated links. Here, each active wireless unit generally requires the assignment of a dedicated link on the downlink, as well as a dedicated link on the uplink.

With the explosion of the Internet and the increasing demand for data, resource management has become a growing issue in cellular communication systems. Next generation wireless communication systems, such as those employing High Speed Downlink Packet Access ("HSDPA"), are expected to provide high rate packet data services in support of Internet access and multimedia communication. Unlike voice, however, data communications may be potentially bursty yet relatively delay tolerant. Data communications, as such, may not require dedicated links on the downlink or the uplink, but rather enable one or more channels to be shared by a number of wireless units. By this arrangement, each of the wireless units on the uplink competes for available resources. Resources to be managed in the uplink include the received power at the base station, and the interference created by each user to other users in the same sector or cell, as well as in other sectors or cells, for example.

Various implementations have been examined for HSDPA systems. One such scheme is orthogonal frequency-division multiple access ("OFDMA"). In OFDMA implemented HSDPA systems, a carrier signal may be defined by a number (e.g., 1024) of sub-carriers or tones transmitted using a set of mathematically time orthogonal continuous waveforms. One example of a set of mathematically time orthogonal continuous waveforms is a collection of sinusoids having frequencies that are integer multiples of a fixed positive value. The orthogonality of the tones in the carrier signal is of considerable importance in an OFDMA system. By employing orthogonal continuous waveforms, the transmission and/or reception of the tones may be simply achieved. More particularly, orthogonality prevents the tones from interfering with one another.

In OFDMA systems, a number of neighboring tones may be grouped together to form a block of tones. In so doing, each wireless unit may be assigned (e.g., allocated) one or more blocks of tones. Each tone may experience flat fading with respect to the other tones. Therefore, the equalization demands in the transmission and/or reception of the block of tones may be substantially reduced.

It should be noted, however, that the base station might need to manage its resources on the downlink in an HSDPA system. These base station resources include a transmit power budget. OFDMA may support a simplified implementation for managing a base station's transmit power budget. In one exemplary HSDPA system employing OFDMA, the transmit power budget may be uniformly allocated.

Once the transmit power has been allocated, the base station controls the rate of transmission for each wireless unit. In an OFDMA implemented HSDPA system, this process may involve transmitting one or more pilot signals to each wireless unit. After receiving the pilot signal(s), each wireless unit transmits a signal containing channel condition information to the base station. The channel in which the block(s) of tones are transmitted on the downlink is characterized here by this signal, more commonly referred to as channel quality information ("CQI"). More particularly, a single CQI signal0 is transmitted from each wireless unit to the base station irrespective of the number of blocks of tones each wireless unit may have designated thereto. The base station, in response to receiving a CQI from each wireless unit, may control the rate of transmission for each of the wireless units. Consequently, the number of blocks designated to a user may be reflective of the data demands of the user and the capacity of the system.

The protocol exchange in deriving the appropriate the transmit power and/or transmit rate allocated by the base station to wireless units accessing HSDPA services, however, has historical roots in CDMA technology. More particularly, the transmission of a single CQI signal to the base station for characterizing the channel condition, as viewed by the wireless unit, was designed for CDMA systems implementing HSDPA. CDMA systems employ a multicode transmission, code division multiplexing scheme. As stated hereinabove, this multicode scheme designates a distinct channelization code(s) to each wireless unit in the transmission and/or reception of a signal, such as a data packet, for example. As the condition of the channel may not vary for the channelization code(s) assigned to each wireless unit, a single CQI signal is an appropriate feedback method.

A number of issues arise, however, when implementing an HSDPA system implemented using OFDMA. In contrast to CDMA, OFDMA does not designate distinct channelization codes to each wireless unit. Rather, each wireless unit is allocated one or more blocks of tones. The channel quality, however, may vary from block to block within the carrier signal. One wireless unit may receive a number of blocks, each of which may fade at differing degrees. Consequently, the single CQI signal may not reflect changes in the channel condition over the course of time in which a number(s) of blocks are transmitted on the downlink to a wireless unit. In so doing, the resources of the base station may not be optimally managed, and the HSDPA services may not be most efficiently utilized.

Therefore, a demand exists for a feedback method to compensate for changes, over time, in the channel condition of each wireless unit. Moreover, a need exists for a feedback method supporting the transmission and reception of any number of blocks, each of which may fade at differing degrees. Furthermore, a demand exists for a feedback method in an HSDPA system implemented using OFDMA.

### SUMMARY OF THE INVENTION

The present invention provides a method for providing feedback to compensate for changes in the channel condition of each wireless unit. More particularly, the present invention provides a method of transmitting the channel condition based on the number of blocks allocated to a wireless unit. The method of the present invention may be applied to HSDPA systems, including those that are implemented using OFDMA. Consequently, a base station may receive one or more feedback or CQI signals from a wireless unit corresponding with one or more blocks of tones.

In one embodiment of the present invention, a new user seeking HSDPA service may receive any or all blocks of tones allocated to other users from a base station. Here, the blocks of tones received by the new user may include pilot information scattered therein. The new user, in response, may generate an initial CQI signal(s) corresponding with the blocks of tones using frequency and/or time multiplexed pilot information, for example. The generated initial CQI signal(s) may comprise, for example, an average of the channel quality information for two or more of the received blocks allocated to other users based on the pilot information embedded therein. Alternatively, the generated initial CQI signal(s) may also comprise a mean value determined from the two or more of the received blocks allocated to other users based on the pilot information embedded therein.

In another embodiment of the present invention, a base station may schedule a new user and allocate one or more blocks thereto in response to an initial CQI signal. The new user, in response, may generate one or more follow-up CQI signals corresponding with the block(s) of tones allocated thereto. The follow-up CQI signal(s) may comprise, for example, an average of the blocks allocated to the newly scheduled user from the blocks of tones received. The follow-up CQI signal(s), alternatively, may also comprise a mean value determined from the blocks allocated to the newly scheduled user from the blocks of tones received.

### BRIEF DESCRIPTION OF THE DRAWINGS

The present invention will be better understood from reading the following description of non-limiting embodiments, with reference to the attached drawings, wherein below:
**FIG. 1** depicts an embodiment of the present invention;
**FIG. 2** depicts an operative scenario of the present invention;
**FIG. 3** depicts an exemplary aspect of the present invention;
**FIG. 4** depicts another exemplary aspect of the present invention; and
**FIG. 5** depicts yet another exemplary aspect of the present invention.

It should be emphasized that the drawings of the instant application are not to scale but are merely schematic representations, and thus are not intended to portray the specific dimensions of the invention, which may be determined by skilled artisans through examination of the disclosure herein.

### DETAILED DESCRIPTION

A wireless communication system offering HSDPA services may be implemented by a number of schemes, including OFDMA. In selecting an OFDMA implementation, the channels for conveying data from the base station to each wireless unit may be defined by any one of a number of multiple access schemes, including code division, time division, and/ or frequency division, for example. Therefore, multi-code transmission, code division multiplexing and link adaptation may be employed in conjunction with HSDPA.

The present invention provides a method for providing feedback to compensate for changes in the channel condition of each wireless unit. More particularly, the present invention provides a method of transmitting the channel condition based on the number of blocks allocated to a wireless unit. The method of the present invention may be applied to HSDPA systems, including those that are implemented using OFDMA. Consequently, a base station may receive one or more feedback or CQI signals from a wireless unit corresponding with one or more blocks of tones.

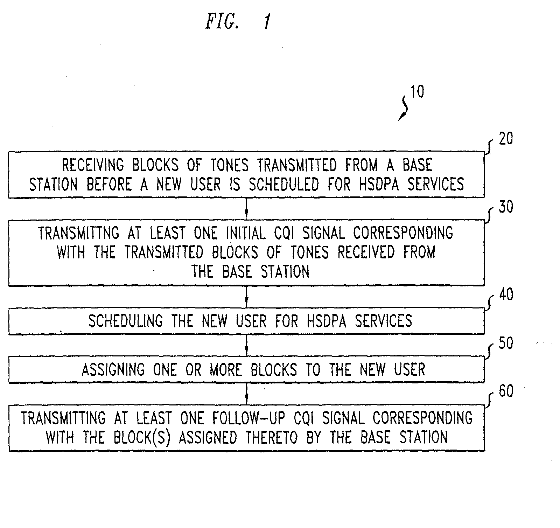

Referring to **FIG. 1**, a flow chart depicting one embodiment of the present invention is illustrated. More particularly, a feedback method (10) is depicted that compensates for changes in the channel condition of each wireless unit. For the purposes of the present disclosure, the wireless unit may be seeking data services, such as HSDPA, for example.

Initially, a base station of the wireless communication system generates one or more pilot signals. The generated pilot signal(s) are transmitted to a number of wireless units. The pilot signal(s) may be transmitted after any number of protocol exchanges between the base station and wireless unit. Consequently, the base station may have already determined after transmitting the pilot signal(s) which wireless unit(s) is seeking to acquire access to its HSDPA services.

Thereafter, a wireless unit, seeking to access the HSDPA services of a base station, receives the blocks of orthogonal tones within a carrier (20). Transmitted by the base station, these blocks of tones may be in use and allocated to other wireless units at the time of reception. Consequently, the wireless unit may receive all the blocks, or a subset of blocks, within the carrier, as transmitted by the base station. It may be advantageous for the wireless unit to receive as many transmitted blocks by the base station as possible.

In response to receiving the blocks of tones transmitted by the base station, the wireless unit transmits at least one initial channel quality information ("CQI") signal (30). The initial CQI signal corresponds with the transmitted blocks received by the wireless unit from the base station. More particularly, the initial CQI signal(s) may be determined by calculating an average and/ or a mean value from the received blocks of orthogonal tones within a carrier (**20**). Once the calculation is complete, the initial CQI signal(s) may be to the average and/ or mean value. Upon reviewing the present disclosure, however, various alternative characterizations for the initial CQI signal(s) will become apparent to skilled artisans. Thusly, for example, in place of calculating an average and/or a mean value, an alternative mathematical representative technique may be employed for characterizing the transmitted blocks received by the wireless unit.

Upon receiving the transmitted initial CQI signal, a scheduling algorithm may be initiated (**40**). This scheduling algorithm is typically embedded within the base station, though alternatives are known. The scheduling algorithm prioritizes for each worthy user's access and privileges to the base station's HSDPA services. In doing so, the scheduling algorithm may examine various factors, including, for example, the received initial CQI signal(s), the resources in use and the resources available, as well as CQI signal(s) from other wireless units being serviced and seeking service by the base station. Upon assessing these factors, the base station prioritizes each user, including the new wireless unit seeking access.

Subsequently, the base station assigns the newly scheduled wireless unit a portion of its resources. The base station, more particularly, allocates one or more blocks of tones to the newly scheduled wireless unit (50). These blocks, at the time of assignment, are unencumbered and/or non-occupied by other users. The assigned blocks may be randomly assigned to worthy scheduled wireless units in accordance with the factors considered in scheduling the wireless units. Consequently, the most attractive wireless units may have a larger number of assigned tones in comparison with the least attractive wireless units. Furthermore, the number of blocks allocated to the newly scheduled wireless unit may take the size of downlink transmission in consideration, as well.

The newly scheduled wireless unit, now having one or more blocks allocated thereto, may begin receiving a downlink transmission. This downlink transmission may be data. Alternatively, the downlink transmission may also include voice and/or video, for example.

Once the downlink transmission has been initiated, the method (**10**) employs a subsequent feedback step. To insure that the channel quality information is taken into account during the downlink transmission, one or more follow-up CQI signals are transmitted by the wireless unit to the base station (**60**). The follow-up CQI signal(s) correspond with the number of blocks allocated to the wireless unit. More particularly, the follow-up CQI signal(s) may be determined by calculating an average and/or a mean value from the allocated blocks of orthogonal tones. Once the calculation is complete, the follow-up CQI signal(s) may be set to the average and/or mean value. Upon reviewing the present disclosure, however, various alternative characterizations for the follow-up CQI signal(s) will become apparent to skilled artisans. Thusly, for example, in place of calculating an average and/ or a mean value, an alternative mathematical representative technique may be employed for characterizing the transmitted blocks received by the wireless unit.

The base station receives the follow-up CQI signal(s) from each of the wireless units accessing its HSDPA services. In response, the base station may reschedule the downlink transmission to the wireless unit. This determination may be based on the quality of the channel information, as well as traffic demands, and other users seeking access to HSDPA services that may be more attractive to the base station. If the follow-up CQI signal(s) do not cause the wireless unit to be rescheduled, the downlink transmission is eventually completed. Thereafter, the steps of the present method (10) may be repeated to receive a subsequent downlink transmission(s).

In accordance with the present invention, a HSDPA system may be implemented using OFDMA. In one example, the frequency sub-carriers or tones may be divided into 16 frequency blocks for each OFDM symbol. Each frequency block may consist of a fixed number of neighboring or adjacent sub-carriers (e.g., tones). Moreover, each frequency block may be used as a basic unit for frequency scheduling. Each wireless unit may be assigned one or more frequency blocks for a given TTI, depending on the amount of data in the buffer. Multiple wireless units may be scheduled during one TTI.

In an ideal OFDMA system, each wireless unit would send back channel quality information signals for each sub-carrier. In response, the base station might schedule the wireless units having the most attractive channel quality information signals for each sub-carrier. Thereafter, the base station might optimize the transmit power and data rate for the next transmission in a joint or separate process step.

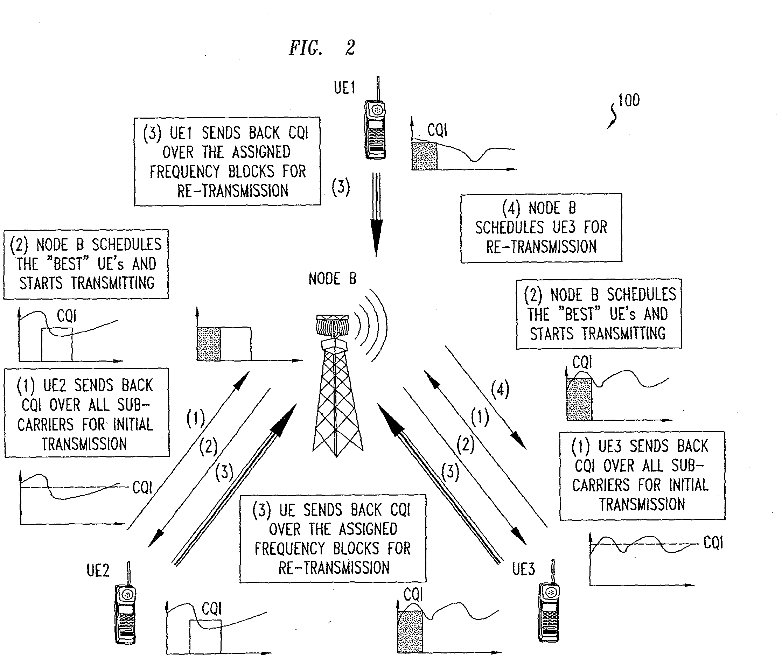

Referring to **FIG. 2**, an operative scenario of the present invention is illustrated. More particularly, an example of the hereinabove frequency-scheduling scheme is shown. Here, once a wireless unit is scheduled for a first transmission, subsequent re-transmissions may advantageously occur in the same frequency blocks as those assigned for the first transmission. Several wireless units, thusly, may cluster within the same frequency blocks competing for the ability to transmit and/or re-transmit. Consequently, the base station (e.g., Node B) may balance the load on each frequency block. The base station may, at its own discretion, determine the number of frequency blocks to assign to a set of wireless units. The decision, however, may not likely be based on the buffer size for a scheduled wireless unit during that unit's first transmission.

### EXEMPLARY SYSTEM

In one example of the present invention, an assumption was made that the OFDMA may first operate in a 5 MHz band. It was also assumed that the symbol duration of the OFDMA system might fit into the 0.67 msec time slots. The symbol duration should be less than the coherence time and the sub-carrier spacing should be less than the coherence bandwidth. Assuming that the wireless unit (e.g., user equipment or UE) speed ranges from 0km/hr to 400 km/hr, we may obtain the following table for coherence time under different definitions and UE speeds.

**Table 1 -**

| UE speed vs. Coherence Time | | |
|---|---|---|
| UE Speed | Coherence Time *T*_{*c*} | |
| | Definition 1: *T*_{*c*} = 0.179/*f*_{*d*} | Definition 2: *T*_{*c*} = 0.423/*f*_{*d*} |
| 100 km/hr | 967 µsec | 2284 µsec |
| 400 km/hr | 242 µsec | 571 µsec |

The sub-carrier spacing may need to be large enough to provide robustness against the frequency offset and phase noise, but also small enough to retain flat fading. Normally, the tone spacing can be selected by first fixing a maximum delay spread for all possible environments, calculating the coherence bandwidth and then using it as an upper bound for the sub-carrier spacing. For example, it may be assumed that the Pedestrian A, Pedestrian B, and Vehicular A each channel model have maximum delay spread at 410 ns, 3.7 µsec and 2.5 µsec, respectively. Consequently, a maximum delay spread of 10 µsec may be considered. The basis for considering a delay spread of 10 µsec is to include both the cyclic prefix, while allowing some ramp-up and ramp-down period for the power amplifier using the time domain filtering. Time domain filtering may be necessary to avoid the spurious effect due to the possible sudden transition between the consecutive OFDMA symbols.

It should be noted that in simulcast environment, it has been observed that the inference coming from other cells may be the dominant multi-path interference, and therefore may have a longer delay. Consequently, larger delay spread should also be considered if multicast and simulcast services are of interest. Referring to Table 2, various parameters for coherence bandwidth are summarized.

**Table 2 -**

| Maximum Delay Spread vs. Coherence Bandwidth | | |
|---|---|---|
| Max. Channel Time Dispersion *σ*_{*d,max*} | Coherence Bandwidth *B*_{c} | |
| | Definition 1: 0.9 correlation BW *B*_{c} = 1/(50*σ_{*d,max*}) | Definition 2 : 0.5 correlation BW *B*_{c} = 1/(5*σ_{*d,max*}) |
| 10 µsec | 2 kHz | 20kHz |
| 40 µsec | 0.4 kHz | 5 kHz |

Referring to Table 1, any number of symbols may be selected without violating the coherence time. However, to keep the overhead - e.g., the cyclic prefix and guard time - relatively small, a maximum of four (4) OFDMA symbols may be considered in one 0.67 msec time slot. Referring to Table 3, the number of tones under 5, 10, and 15% time domain overhead (*T*_{*g*}) assumptions, and the FFT that may be needed to implement it, presuming a 5 MHz bandwidth, are summarized. It should be noted that *T*ᵤ might be viewed as the signal part of the symbol, and Tg the guard period. Moreover, the number of tones may be rounded to the nearest integers.

**Table 3 -**

| Number of Symbols per Time slot vs. Number of sub-carriers vs. FFT | | | | | | | |
|---|---|---|---|---|---|---|---|
| No. No. Sym/TS | OFDMA Symbol period (*T*ᵤ+*T*_{g}) | No of tones w/5% overhead | No. of FFT points | No of tones w/10% overhead | No. of FFT points | No of tones w/15% overhead | No. of FFT points |
| 1 | 667 µsec | 3174 | 4096 | 3030 | 4096 | 2898 | 4096 |
| 2 | 333 µsec | 1587 | 2048 | 1515 | 2048 | 1449 | 2048 |
| 3 | 222 µsec | 1058 | 2048 | 1010 | 1024 | 966 | 1024 |
| 4 | 167 µsec | 793 | 1024 | 757 | 1024 | 724 | 1024 |

### Baseline System

From Table 1, 2, and 3, herein, it might be advantageous to use three (3) symbols in 0.67 msec time slot and a 1024-point FFT for the baseline system. To maximize the data rate, it might be advantageous to employ all 1024 sub-carriers (e.g., tones). However, the number of sub-carriers may be reduced if tone spacing is considered. It may be advantageous to employ a sub-carrier spacing between 4.80 and 4.87 kHz. Assuming sub-carrier spacing of 4.8 kHz, a signal period (*T*ᵤ) of 208.4 µsec and a guard time (*T*_{g}) of 13.8 µsec may be used. The total bandwidth of such a system may be about 4.9152 MHz. Consequently, a frequency guard band of 42.4 kHz may remain on each side of the 5 MHz band. Assuming a sub-carrier spacing of 4.85 kHz, a 16.8 kHz guard band may remain on each side of the 5MHz band and leaves a 16 µsec guard time. Time domain windowing may be employed if smaller guard band is desired.

In the example of a sub-carrier spacing of 4.8KHz, the sampling period may be 0.2034 µsec. The guard time may accommodate 68 samples, which should consume about 13.83 µsec. Note that in this scenario, at least 50 samples may be required in the guard time to provide a delay tolerance of 10 µsec. Referring to Table 4, the parameters for a baseline OFDMA system employing a sub-carrier spacing of 4.8KHz are summarized.

**Table 4.**

| Suggested baseline OFDM system | |
|---|---|
| System Parameters | Suggested Values |
| Symbol per 0.67msec time slot | 3 |
| Number of FFT points | 1024 |
| Number of sub-carriers | 1024 |
| OFDM Symbol period | 222usec |
| Sub-carrier spacing | 4.8kHz |
| Guard time | 13.8usec |
| Guard band | 42.4kHz on each size of the 5MHz band |
| Sampling period | 0.2034usec |
| Number of Samples in guard time | 68 |
| Cyclic prefix length | 50 samples |
| Power amplifier ramp-up and ramp-down period | 9 samples each |

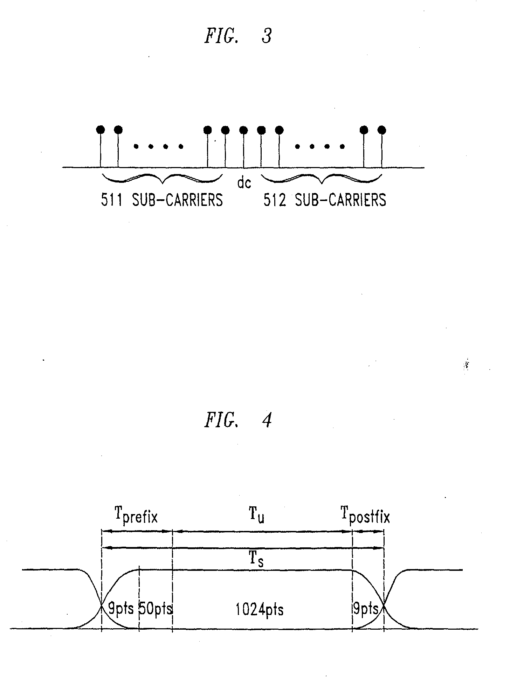

Referring to FIG. 3, an exemplary sub-carrier assignment is illustrated. Referring to FIG. 4, an exemplary time-diagram for several OFDMA symbols is also illustrated. It should be noted that the nine (9) points on both sides, as depicted in FIG. 4, may be used as part of the cyclic prefix and postfix. For example, these samples may be replicas of the samples from the end and beginning of the data samples.

### Time Domain Windowing

A time domain windowing scheme may also be considered in the exemplary system. One time domain windowing scheme may employ raise cosine filtering. Various roll-off factors can be determined upon selecting a suitable guard time. It should be noted, however, that more complex windowing in both time and frequency domain may also be considered.

### Pilot Insertion

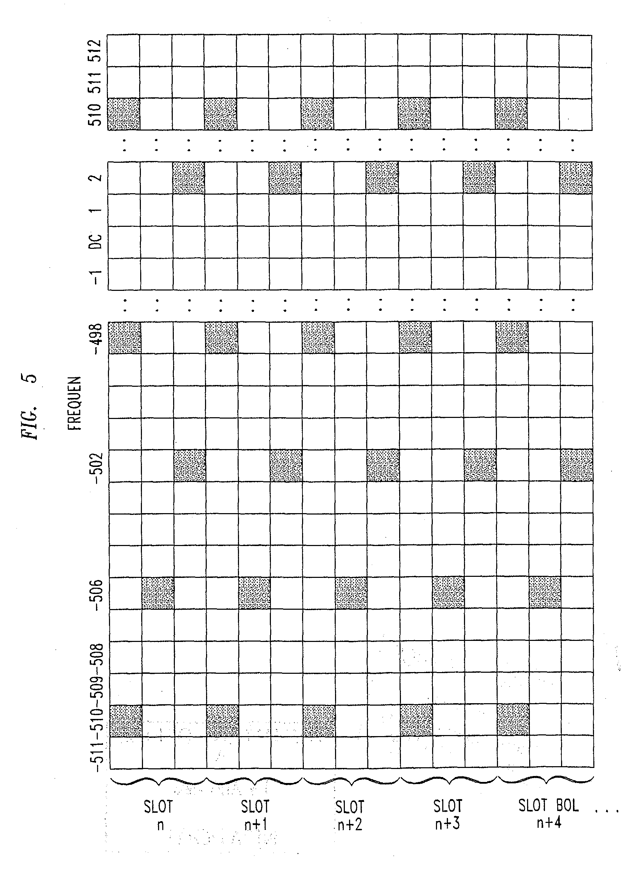

The exemplary system may also employ coherent modulation. Referring to FIG. 5, an exemplary two-dimensional pilot pattern is illustrated. Here, pilots may be inserted to provide the necessary phase and amplitude reference. From Table 1 and 2 hereinabove, the channel may be characterized as quasi-static within one time slot (e.g., 3 OFDMA symbols). Here, the frequency may also be characterized as flat over four (4) to five (5) sub-carriers.

Referring to FIG. 5, a two-dimensional pilot pattern is illustrated for coherent demodulation. Here, depending on the symbol location within a time slot, the pilots are inserted. Various arrangements in this regard may be devised. In one example, the first symbol in the time slot, pilots may be inserted into the sub-carrier number, as follows: -510, -498, ..., -6, 6, ... 510. Moreover, for the second symbol, pilots may be inserted into sub-carrier number, as follows: -506, -494, ... ,-2, 10, ... 502. For the third symbol, pilots may be inserted into sub-carrier number, as follows: -502, -490, ..., -10, 2, ... , 506. Each sub-carrier should estimate the phase and amplitude distortion from at least three nearest pilots. From the pilot pattern depicted in FIG. 5, 256 pilots may be employed within one time slot. Consequently, a pilot-to-data ratio of approximately 256/1023/3, or 8.34%, may be derived.

### Supported Data Rates

The raw bit rates of the exemplary system may be computed without any coding or signaling overhead. More precise data rates can be computed once the modulation, code rate, pilot-to-data ratio, and the signaling overhead are assumed. Referring to Tables 5 and 6, various possible data rates for the exemplary system with pilot-to-data ratio of 8.34% and 15% respectively, and different modulations are summarized. Note that these data rates do not take into account the signaling overheads.

**Table 5 -**

| Data rates using different modulations with the pilot-to-data ratio of 8.34% | | | |
|---|---|---|---|
| 1023 sub-carrier system | Modulation | | |
| Code rate | QPSK | 16QAM | 64QAM |
| 1/4 | 2.11Mbps | 4.22Mbps | 6.34Mbps |
| 1/2 | 4.22Mbps | 8.45Mbps | 12.67Mbps |
| 3/4 | 6.34Mbps | 12.67Mbps | 19.00Mbps |
| 1 | 8.45Mbps | 16.90Mbps | 25.34Mbps |

**Table 6 -**

| Data rate using different modulations with the pilot-to-data ratio and signaling overhead equal to 15% | | | |
|---|---|---|---|
| 1023 sub-carrier system | Modulation | | |
| Code rate | QPSK | 16QAM | 64QAM |
| 1/4 | 1.96Mbps | 3.91Mbps | 5.88Mbps |
| 1/2 | 3.91Mbps | 7.84Mbps | 11.85Mbps |
| 3/4 | 5.88Mbps | 11.75Mbps | 17.63Mbps |
| 1 | 7.84Mbps | 15.67Mbps | 23.50Mbps |

While the particular invention has been described with reference to illustrative embodiments, this description is not meant to be construed in a limiting sense. It is understood that although the present invention has been described, various modifications of the illustrative embodiments, as well as additional embodiments of the invention, will be apparent to one of ordinary skill in the art upon reference to this description without departing from the spirit of the invention, as recited in the claims appended hereto. Consequently, the method, system and portions thereof and of the described method and system may be implemented in different locations, such as network elements, the wireless unit, the base station, a base station controller, a mobile switching center and/ or a radar system. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure. Those skilled in the art will readily recognize that these and various other modifications, arrangements and methods can be made to the present invention without strictly following the exemplary applications illustrated and described herein and without departing from the spirit and scope of the present invention It is therefore contemplated that the appended claims will cover any such modifications or embodiments as fall within the true scope of the invention.

## Claims

1. A method of communication comprising:
transmitting a channel condition information signal corresponding with a number of blocks allocated to a wireless unit, wherein each block comprises a set of orthogonal tones.

2. The method of Claim 1, wherein the step of transmitting a channel condition information signal comprises:
determining an average and/or a mean value from at least two of the allocated blocks; and
setting the channel condition information signal to the average and/ or a mean value.

3. The method of Claim 2, further comprising:
transmitting an initial channel condition information signal corresponding with a set of transmitted blocks received by the wireless unit.

4. The method of Claim 3, wherein the step of transmitting an initial channel condition information signal comprises:
determining an average and/or a mean value from at least two of the transmitted blocks; and
setting the initial channel condition information signal to the average and/or a mean value.

5. The method of Claim 3, wherein the number of blocks allocated to the wireless unit corresponds with the initial channel condition information signal and/or a downlink transmission size.

6. A method of data communication comprising:
allocating a number of blocks from a set of blocks, each block comprising a set of orthogonal tones; and
receiving a channel condition information signal corresponding with the number of allocated blocks.

7. The method of Claim 6, wherein the received channel condition information signal comprises an average and/or a mean value from at least two of the allocated blocks.

8. The method of Claim 6, further comprising:
reallocating the number of blocks from a set of blocks in response to the channel condition information signal.

9. The method of Claim 6, further comprising:
receiving an initial channel condition information signal corresponding with the set of blocks.

10. The method of Claim 9, wherein the step of allocating a number of blocks from a set of blocks comprises:
scheduling the allocation of blocks in response to the initial channel condition information signal and/ or a downlink transmission size.

11. The method of Claim 10, wherein each allocated block conveys data on a downlink transmission.

12. A method of data communication comprising:
transmitting an initial channel condition information signal corresponding with a set of transmitted blocks; and
transmitting a follow-up channel condition information signal corresponding with a number of allocated blocks, wherein each block of the transmitted and allocated blocks comprises a set of orthogonal tones.

13. The method of Claim 12, wherein the step of transmitting an initial channel condition information signal comprises:
determining an average and/ or a mean value from at least two of the transmitted blocks; and
setting the initial channel condition information signal to the average and/or a mean value.

14. The method of Claim 12, wherein the step of transmitting a follow-up channel condition information signal comprises:
determining an average and/or a mean value from at least two of the allocated blocks; and
setting the channel condition information signal to the average and/or a mean value.

15. The method of Claim 12, wherein each allocated block conveys data on a downlink transmission, and the number of blocks allocated corresponds with the initial channel condition information signal and/or a downlink transmission size.
